(19) **Europäisches Patentamt / European Patent Office / Office européen des brevets**

(11) **EP 2 661 636 B1**

(12) **FASCICULE DE BREVET EUROPEEN**

(45) Date de publication et mention de la délivrance du brevet:
**26.11.2014 Bulletin 2014/48**

(21) Numéro de dépôt: **11815547.2**

(22) Date de dépôt: **28.12.2011**

(51) Int Cl.:
***G01P 5/26*** (2006.01)

(86) Numéro de dépôt international:
**PCT/FR2011/053200**

(87) Numéro de publication internationale:
**WO 2012/093221 (12.07.2012 Gazette 2012/28)**

(54) **PROCEDE ET DISPOSITIF DE DETERMINATION DES MOUVEMENTS D'UN FLUIDE A PARTIR DE MESURES A DISTANCE DE VITESSES RADIALES**

VERFAHREN UND VORRICHTUNG ZUR BESTIMMUNG DER BEWEGUNGEN EINER FLÜSSIGKEIT AUS FERNMESSUNGEN RADIALER GESCHWINDIGKEITEN

METHOD AND DEVICE FOR DETERMINING THE MOVEMENTS OF A FLUID FROM REMOTE MEASUREMENTS OF RADIAL VELOCITIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.01.2011 FR 1150057**

(43) Date de publication de la demande:
**13.11.2013 Bulletin 2013/46**

(73) Titulaires:
• **Leosphere**
  **75008 Paris (FR)**
• **Aria Technologies**
  **92100 Boulogne Billancourt (FR)**

(72) Inventeurs:
• **BOQUET, Matthieu**
  **F-75014 Paris (FR)**
• **NIBART, Maxime**
  **F-77400 Lagny Sur Marne (FR)**
• **ALBERGEL, Armand**
  **F-92500 Rueil Malmaison (FR)**

(74) Mandataire: **Pontet Allano & Associes**
**Parc Les Algorithmes, Bâtiment Platon**
**CS 70003 Saint Aubin**
**91192 Gif sur Yvette Cedex (FR)**

(56) Documents cités:
**EP-A2- 1 798 530     WO-A1-2010/052385**
**US-A- 4 735 503**

EP 2 661 636 B1

## Description

### Domaine technique

La présente invention concerne un procédé de détermination des mouvements d'un fluide à partir de mesures à distance de vitesses radiales de déplacement de ce fluide. Elle concerne aussi un dispositif de télédétection des mouvements d'un fluide mettant en oeuvre le procédé.

Le domaine de l'invention est plus particulièrement mais de manière non limitative celui de la télédétection des caractéristiques du vent dans les couches basses de l'atmosphère.

### Etat de la technique antérieure

La mesure des mouvements de l'atmosphère ou du vent est d'une importance considérable pour de nombreuses applications, notamment en météorologie et pour la surveillance et la caractérisation de sites comme les aéroports et les champs éoliens.

Il est souvent utile de mesurer le déplacement des masses d'air dans une large gamme d'altitudes ou dans une zone correspondant à un volume étendu, ce qui ne peut être réalisé avec des anémomètres classiques comme des anémomètres à coupole, et nécessite des instruments de télédétection, aptes à faire des mesures à distance.

Parmi ces instruments on trouve notamment les radars, les lidars et les sodars. Les radars et les lidars utilisent des ondes électromagnétiques, dans des gammes de fréquences respectivement hyperfréquences et optiques. Les sodars utilisent des ondes acoustiques.

On connaît notamment le document de A. Dolfi-Bouteyre, M. Valla, B. Augère, J.-P. Cariou, D. Goular, D. Fleury, G. Canat, C. Planchat, T. Gaudo, L. Lombard, O. Petilon, J. Lawson-Daku, « 1.5 $\mu$m all fiber pulsed lidar for wake vortex monitoring », 14th Coherent Laser Radar Conference (CLRC XIV), Snowmass, CO, USA, 8-13 juillet 2007 qui présente un exemple de réalisation de lidar.

Les mesures de déplacement de masses d'air avec de tels instruments sont effectuées en général de la façon suivante :

- L'appareil émet un ou plusieurs faisceaux d'ondes (acoustiques et/ou électromagnétiques) selon des axes d'émission dans les zones à mesurer, en continu ou sous forme d'impulsions. Les émissions selon les différents axes d'émission peuvent être simultanées ou séquentielles.
- Les faisceaux subissent des effets de diffusion dans l'atmosphère, dus en particulier aux inhomogénéités rencontrées (aérosols, particules, variations d'indices de réfraction pour les ondes électromagnétiques ou d'impédance acoustique pour les ondes acoustiques). Lorsqu'ils sont diffusés dans des masses d'air ou des particules en mouvement, ces faisceaux d'ondes subissent également un décalage par effet Doppler de leur fréquence.
- Les faisceaux rétrodiffusés sont captés par un ou plusieurs récepteurs orientés selon des axes de mesure. Ces récepteurs détectent les ondes diffusées par l'atmosphère dans leur direction le long de leur axe de mesure.
- La distance le long de l'axe de mesure des détecteurs à laquelle a eu lieu la diffusion peut alors être calculée, par exemple par une méthode de mesure de temps de vol, ou une méthode de mesure de déphasage par interférométrie.
- La vitesse radiale selon l'axe de mesure des masses d'air ou des particules peut également être obtenue par mesure du décalage en fréquence, par effet Doppler, de l'onde. Cette vitesse radiale mesurée correspond à la projection du vecteur-vitesse du site de diffusion sur l'axe de mesure du détecteur.

Les instruments de télédétection, dont en particulier les lidars adaptés à la mesure des caractéristiques du vent dans les couches basses de l'atmosphère, sont souvent de type monostatique. Cela signifie que la même optique ou la même antenne (acoustique ou électromagnétique) sont utilisées pour l'émission et pour la réception du signal. Le volume sondé est en général distribué le long d'un cône de sommet situé au niveau de l'optique ou de l'antenne de l'instrument. Chaque faisceau d'impulsions de l'instrument le long du cône mesure la vitesse radiale de déplacement des particules suivant un axe de mesure confondu avec l'axe d'émission. On obtient ainsi des mesures de la vitesse radiale du vent, représentative de la projection du vecteur vent sur l'axe de propagation du faisceau.

Il est ensuite nécessaire de calculer, sur la base des mesures de vitesse radiales obtenues, le vecteur vent dans la totalité du volume d'intérêt.

Dans les dispositifs existants, ce calcul est en général effectué en utilisant des modèles purement géométriques. Ces modèles ont l'inconvénient de reposer sur une hypothèse parfois peu réaliste qui est l'homogénéité spatiale et temporelle du vent pendant la durée de la mesure de l'échantillon. Selon cette hypothèse, à une altitude donnée le vecteur vent est identique en tout point de l'atmosphère sondée par l'instrument.

Il est par exemple connu de calculer les composantes du vecteur vent à une altitude donnée à partir d'au moins trois mesures de vitesses radiales mesurées à une même altitude selon au moins trois directions différentes, en résolvant un système d'au moins trois équations à trois inconnues qui décrit la relation géométrique entre le vecteur vent et ses projections selon les axes de mesures que constituent les mesures de vitesses radiales.

On connaît une méthode de calcul géométrique décrite dans la littérature sous le nom de « Velocity Azimuth Display » (VAD), qui repose également sur l'hypothèse d'homogénéité spatiale du vent à une altitude donnée. Cette méthode est applicable si le dispositif permet d'effectuer des mesures selon des directions couvrant la totalité d'un cône de mesure. Elle consiste en une optimisation paramétrique sur la vitesse horizontale, la direction et la vitesse verticale, en exploitant le fait que l'ensemble des vitesses radiales mesurées sur un tour complet (360 degrés) du cône de mesure prend la forme d'une fonction harmonique. Cette méthode est notamment mise en oeuvre pour le traitement de mesures obtenues avec des lidars.

On connaît le document US 4,735,503 de Werner et al. qui décrit une méthode dérivée de cette méthode VAD selon laquelle l'acquisition peut être limitée à des secteurs angulaires. Cette méthode est toutefois basée sur les mêmes hypothèses d'homogénéité spatiale du vent à une altitude donnée.

Les instruments de télédétection atmosphérique pour la mesure du vent mettant en oeuvre des techniques géométriques de reconstruction du vecteur vent permettent une mesure précise de la vitesse moyenne du vent lorsque la mesure est effectuée au dessus de terrains essentiellement plats (terrain pas ou très peu vallonné ou en offshore). Par exemple, on obtient avec des lidars des erreurs relatives pour des mesures moyennées sur 10 minutes inférieures à 2% par rapport à la référence que constituent des anémomètres à coupelles calibrés.

En revanche, la précision sur la détermination de la vitesse horizontale et verticale se dégrade sensiblement lorsque la mesure est effectuée au dessus de terrains plus complexes tels que des terrains vallonnés ou montagneux, couverts de forêt, .... Une erreur relative sur des valeurs moyennes calculées sur 10 minutes de l'ordre de 5% à 10% a été observée sur des sites complexes, pour des mesures effectuées avec ces mêmes lidars et par rapport à un anémomètre à coupelles calibré.

Les dispositifs de télémesure actuels mettant en oeuvre des modèles géométriques ne permettent donc pas de mesurer de façon suffisamment précise la vitesse horizontale et verticale, et la direction du vent en terrain complexe. En effet, dans ce cas là, le vent ne peut plus être considéré comme étant homogène à une altitude donnée dans le volume d'atmosphère sondé par l'instrument. Or des mesures précises des caractéristiques du vent sont pourtant essentielles dans ces conditions, notamment dans le cadre du développement de parcs éoliens.

Cette limitation apparaît également lorsque l'on recherche le profil de vent en fonction de l'altitude, c'est-à-dire le vecteur-vitesse du vent en fonction de l'altitude à l'aplomb de l'instrument.

Le but de la présente invention est de proposer un procédé de détermination des mouvements d'un fluide applicable à la mesure du mouvement des masses d'air dans des environnements complexes.

**Exposé de l'invention**

Cet objectif est atteint avec un procédé de détermination de l'écoulement d'un fluide dans un volume d'intérêt, comprenant des étapes de :

- mesure à distance, en une pluralité de points de mesure répartis le long d'au moins trois axes de mesure d'orientations spatiales différentes traversant le volume d'intérêt, de la vitesse radiale dudit fluide au voisinage desdites points de mesure,
- calcul en une pluralité de points de calcul répartis selon un maillage dans le volume d'intérêt de la vitesse du fluide,

caractérisé en ce que le calcul de la vitesse du fluide comprend l'utilisation d'un modèle de comportement mécanique dudit fluide.

Avantageusement, la mesure de vitesse radiale du fluide peut comprendre une mesure de décalages en fréquence par effet Doppler d'ondes préalablement émises et diffusées dans le fluide.

Les mesures de vitesses radiales peuvent être effectuées avec toutes configurations d'instruments, en particulier des instruments monostatiques (avec des émetteurs et des récepteurs spatialement confondus), des instruments bistatiques (comprenant des émetteurs et des récepteurs distincts spatialement) ou des combinaisons de plusieurs instruments répartis sur un site.

Le procédé selon l'invention est bien entendu applicable aux mesures dans tout type de fluides, notamment des liquides ou des gaz, dans lesquels des mesures de vitesses radiales peuvent être obtenues et qui peuvent être décrits par un modèle de comportement mécanique.

Il permet la détermination des mouvements du fluide dans un volume d'intérêt à partir de mesures de vitesses radiales réalisées selon une pluralité d'axes de mesures, de manière plus précise que les méthodes géométriques connues, en particulier dans les cas où le comportement du fluide dans le volume ne satisfait pas à l'hypothèse d'homogénéité spatiale nécessaire aux modèles géométriques de l'art antérieur.

Cette hypothèse peut par exemple être énoncée de la manière suivante : Le vecteur-vitesse représentatif du mouvement local du fluide est sensiblement identique pour tous les points du volume d'intérêt situés à des distances sensiblement équivalentes par rapport à une référence telle que le capteur. Elle s'avère souvent peu réaliste en pratique.

L'utilisation d'un modèle de comportement du fluide permet de décrire des comportements sensiblement plus complexes. La mesure des composantes du vecteur-vitesse du fluide peut être ainsi sensiblement améliorée, en particulier dans des environnements complexes et/ou perturbés.

Avantageusement, Le procédé selon l'invention est intrinsèquement tridimensionnel, en ce sens qu'il fournit directement une représentation tridimensionnelle du vecteur-vitesse du vent dans un volume. En outre, pour autant que les mesures de vitesses radiales soient effectuées selon des axes de mesure d'orientations spatiales judicieusement réparties par rapport au volume d'intérêt, les composantes du vecteur-vitesse du fluide sont toutes déterminées avec une précision comparable, sans distinction particulière entre par exemple des composantes horizontales et verticales.

Le volume d'intérêt peut être matérialisé ou défini par un maillage reliant les points de calcul. Ce maillage peut comprendre des mailles structurées (maillage cartésien par exemple à section rectangulaire ou curviligne) ou non structurées. Les points de mesure peuvent être inclus dans le volume d'intérêt et dans le maillage.

Le procédé selon l'invention peut en outre comprendre une étape de calcul de conditions d'initialisation, comprenant un calcul de la vitesse du fluide en des points de calcul à partir de mesures de vitesses radiales, en utilisant un modèle géométrique basé sur l'hypothèse que la vitesse du fluide dans le volume d'intérêt est sensiblement homogène dans des couches d'orientation sensiblement parallèle traversées par les axes de mesure, lequel calcul de conditions d'initialisation comprenant au moins l'un parmi :

- un calcul de conditions aux limites comprenant un calcul de conditions contraignantes sur la vitesse (ou le vecteur-vitesse) du fluide en des points de calcul situés à la périphérie du volume d'intérêt, et
- un calcul de conditions initiales comprenant un calcul de la vitesse du fluide en des points de calcul situés dans le volume d'intérêt.

En définissant dans le volume d'intérêt un repère cartésien ($X, Y, Z$) dont l'axe $Z$ définit l'altitude, les couches homogènes peuvent par exemple être orientées de manière sensiblement parallèle aux plans ($X, Y$).

Le procédé selon l'invention peut comprendre en outre une étape de calcul de conditions d'initialisation utilisant la topologie d'une surface matérielle présente dans ou en périphérie du volume d'intérêt et limitant l'extension du fluide, comprenant :

- une détermination de points de calcul du volume d'intérêt situés hors du fluide et/ou au voisinage de ladite surface matérielle, et
- une attribution de conditions contraignantes sur la vitesse (ou le vecteur-vitesse) auxdits points de calcul déterminés.

Cette condition d'initialisation permet de prendre en compte le relief d'une surface présente qui affecte l'écoulement du fluide. La surface matérielle peut être par exemple celle d'un terrain situé à la base du volume d'intérêt, dont la topologie aurait été déterminée au préalable. Pour pouvoir appliquer cette condition d'initialisation, le volume d'intérêt et son maillage sont alors définis de telle sorte à englober totalement ou partiellement ladite surface.

Le procédé selon l'invention peut en outre comprendre une étape de calcul de la vitesse (ou des vecteurs-vitesse) du fluide dans le volume d'intérêt, par résolution des équations du modèle de comportement mécanique du fluide, en utilisant les conditions d'initialisation préalablement calculées.

Seules les conditions d'initialisation, comprenant les conditions aux limites et les conditions initiales, sont calculées sur la base d'une hypothèse d'homogénéité spatiale. Elles constituent le point de départ du calcul de la vitesse du fluide dans le volume d'intérêt :

- les conditions aux limites permettent de créer une contrainte sur la vitesse du fluide en périphérie du volume d'intérêt, afin que la résolution des équations du modèle de comportement mécanique du fluide aboutisse à une solution déterminée dans le volume d'intérêt ;
- les conditions initiales permettent d'initialiser la résolution par une méthode itérative des équations du modèle de comportement mécanique du fluide, de telle sorte également à converger vers une solution déterminée.

Il est possible dans le cadre de l'invention de mettre en oeuvre tous modèles de comportement mécanique du fluide. Le choix du modèle peut avantageusement être adapté en fonction du contexte, pour optimiser la complexité des calculs.

Suivant des modes de mise en oeuvre, le modèle de comportement mécanique du fluide peut comprendre les hypothèses que le fluide comprend un fluide newtonien incompressible et que son écoulement peut être sensiblement décrit par les équations de Navier-Stokes.

Les équations Navier-Stokes, selon un mode de représentation usuel, peuvent comprendre une équation de continuité et une équation de bilan de la quantité de mouvement.

Suivant des modes de mise en oeuvre, le modèle de comportement mécanique du fluide peut comprendre les hypothèses que l'écoulement du fluide est stationnaire.

Suivant d'autres modes de mise en oeuvre, le modèle de comportement mécanique du fluide peut comprendre l'hypothèse que le fluide comprend un fluide parfait et que son écoulement peut être sensiblement décrit par l'équation d'Euler des fluides.

Dans ce cas, par comparaison avec un fluide newtonien incompressible, on néglige en plus les effets de viscosité et les gradients thermiques.

Un fluide newtonien est un fluide dont le tenseur des contraintes visqueuses est une fonction linéaire du tenseur des déformations. Ce modèle s'applique bien à beaucoup de fluides usuels, dont en particulier l'air et l'eau.

On définit les grandeurs suivantes, dont les unités sont exprimées dans le système SI :

$\vec{V}$ : vecteur-vitesse du fluide (norme est en m·s$^{-1}$);

$\nu$ : viscosité cinématique du fluide (m$^2$·s$^{-1}$) ;

$\rho$ : masse volumique du fluide (kg·m$^{-3}$) ;

$\vec{f}$ : résultante des forces massiques s'exerçant dans le fluide (N·Kg$^{-1}$) ;

$p$ : pression du fluide (Pa).

L'écoulement peut alors être décrit par un système d'équations comprenant une équation de conservation de la masse et une équation de conservation du moment telles que :

$$\begin{cases} \vec{\nabla} \cdot \vec{V} = 0 \\ \dfrac{\partial \vec{V}}{\partial t} - \nu\, \nabla^2 \vec{V} + \left( \vec{V} \cdot \vec{\nabla} \right) \vec{V} + \dfrac{1}{\rho} \vec{\nabla} p = \vec{f} \end{cases} \qquad \text{(Eq. 1)}$$

où $\vec{\nabla}$ est l'opérateur nabla, $\overline{\nabla \cdot V}$ la divergence du vecteur-vitesse $\vec{V}$, $\Delta^2 \vec{V}$ le Laplacien vectoriel du vecteur-vitesse $\vec{V}$ et $\overline{\nabla p}$ le gradient de la pression $p$. Le système d'équations (Eq. 1) correspond aux équations de Navier-Stokes pour un fluide incompressible non stationnaire.

Il est parfois possible, par exemple lorsque le fluide considéré est de l'air et le volume d'intérêt situé dans les couches basses de l'atmosphère, de considérer que l'écoulement est stationnaire et que $\vec{f} \cong \vec{0}$. Le système d'équations décrivant l'écoulement du fluide devient alors :

$$\begin{cases} \vec{\nabla} \cdot \vec{V} = 0 \\ -\nu\, \nabla^2 \vec{V} + \left( \vec{V} \cdot \vec{\nabla} \right) \vec{V} + \dfrac{1}{\rho} \vec{\nabla} p = \vec{0} \end{cases} \qquad \text{(Eq. 2)}$$

Le système d'équations (Eq. 2) correspond aux équations de la couche limite pour un fluide incompressible et stationnaire.

On peut choisir de négliger dans l'équation 2 les effets de viscosité, auquel cas on obtient une représentation des équations d'Euler des fluides parfaits :

$$\begin{cases} \vec{\nabla} \cdot \vec{V} = 0 \\ \left( \vec{V} \cdot \vec{\nabla} \right) \vec{V} + \dfrac{1}{\rho} \vec{\nabla} p = \vec{0} \end{cases} \qquad \text{(Eq. 3)}$$

Le système d'équations (Eq. 3) correspond aux équations de la couche limite pour un fluide non visqueux, incompressible et stationnaire.

Il est également possible de mettre en oeuvre un modèle décrit uniquement par l'équation de conservation de la masse, si le fluide peut être simplement considéré comme incompressible :

$$\vec{\nabla} \cdot \vec{V} = 0 \, . \qquad \text{(Eq. 4)}$$

L'équation (Eq. 4) décrit l'écoulement d'un fluide parfait incompressible, stationnaire et non rotationnel.

En résumé, suivant ces modes de mise en oeuvre, avec $\vec{V}$ le vecteur-vitesse du fluide, $\nu$ la viscosité cinématique du fluide, p la masse volumique du fluide, $\vec{f}$ la résultante des forces massiques s'exerçant dans le fluide et *p* la pression du fluide, l'écoulement dudit fluide (considéré comme incompressible et stationnaire) peut être décrit par l'un quelconque des systèmes d'équations :

$$- \quad \begin{cases} \vec{\nabla} \cdot \vec{V} = 0 \\ \dfrac{\partial \vec{V}}{\partial t} - \nu \ \nabla^2 \vec{V} + \left( \vec{V} \cdot \vec{\nabla} \right) \vec{V} + \dfrac{1}{\rho} \vec{\nabla} p = \vec{f} \end{cases} ; \qquad \text{(Eq. 5)}$$

$$- \quad \begin{cases} \vec{\nabla} \cdot \vec{V} = 0 \\ - \nu \ \nabla^2 \vec{V} + \left( \vec{V} \cdot \vec{\nabla} \right) \vec{V} + \dfrac{1}{\rho} \vec{\nabla} p = \vec{0} \end{cases} ; \qquad \text{(Eq. 6)}$$

$$- \quad \begin{cases} \vec{\nabla} \cdot \vec{V} = 0 \\ \left( \vec{V} \cdot \vec{\nabla} \right) \vec{V} + \dfrac{1}{\rho} \vec{\nabla} p = \vec{0} \end{cases} ; \qquad \text{(Eq. 7)}$$

$$- \quad \vec{\nabla} \cdot \vec{V} = 0 \, . \qquad \text{(Eq. 8)}$$

Ces équations aux dérivées partielles du modèle de comportement mécanique du fluide peuvent être résolues numériquement aux points de calcul du volume d'intérêt par une méthode des différences finies, dans laquelle les dérivées sont approximées pour la résolution numérique par des différences finies.

Les équations peuvent ainsi être résolues numériquement aux points de calcul du volume d'intérêt par une méthode itérative, par exemple de type prédiction-correction ou recherche de minima sous contrainte (Lagrangien augmenté ou gradient conjugué), en utilisant les conditions aux limites et les conditions initiales définies et calculées au préalable.

La résolution de ces équations du modèle de comportement mécanique peut comprendre l'utilisation de matrices de conditionnement.

Ces matrices de conditionnement peuvent permettre d'améliorer la convergence de la solution et/ou la stabilité de l'algorithme et/ou de diminuer les effets de bord.

Les équations aux dérivées partielles du modèle de comportement mécanique du fluide peuvent également être résolues numériquement aux points de calcul du volume d'intérêt par d'autres méthodes telles que des volumes finis, des éléments finis ou une méthode spectrale.

Suivant d'autres modes de mise en oeuvre, le modèle de comportement mécanique du fluide peut comprendre les hypothèses que le fluide comprend un fluide parfait (c'est-à-dire un fluide dont la viscosité est négligeable), dont l'écoulement est sensiblement irrotationnel dans le volume d'intérêt.

Selon la loi de conservation de la masse, la divergence du vecteur-vitesse $\vec{V}$ du fluide est alors nulle :

$$\vec{\nabla} \cdot \vec{V} = 0 \qquad\qquad \text{(Eq. 9)}$$

Si on suppose en outre que l'écoulement est irrotationnel, il s'ensuit que le rotationnel du vecteur-vitesse $\vec{V}$ du fluide dans le volume d'intérêt est nul, et donc qu'il existe un potentiel de vitesse $P$ décrivant le fluide. On parle d'écoulement à potentiel de vitesse. Le Laplacien de $P$ est nul et le vecteur-vitesse $\vec{V}$ est le gradient de $P$.

Ainsi, avec $\vec{V}$ le vecteur-vitesse du fluide et $P$ un potentiel de vitesse, l'écoulement dudit fluide peut être décrit par le système d'équations :

$$\begin{cases} \nabla^2 P = 0 \\ \vec{V} = -\vec{\nabla}P \end{cases} \qquad\qquad \text{(Eq. 10)}$$

Ces équations du modèle de comportement mécanique du fluide peuvent être résolues numériquement aux points de calcul du volume d'intérêt par inversion de la matrice du Laplacien.

Le procédé selon l'invention peut comprendre en outre des étapes de :

- calcul de nouvelles conditions d'initialisation à partir de la vitesse du fluide préalablement calculée dans le volume d'intérêt par résolution des équations du modèle de comportement mécanique du fluide,
- calcul de la vitesse du fluide dans le volume d'intérêt, par résolution des équations du modèle de comportement mécanique du fluide, en utilisant lesdites nouvelles conditions d'initialisation.

Ces étapes peuvent être répétées de manière itérative, en utilisant à chaque itération des conditions d'initialisation calculées à partir des vitesses obtenues dans le volume d'intérêt à l'itération précédente. En effet, les conditions d'initialisation calculées à la première itération à partir des mesures de vitesses radiales sont biaisées par l'hypothèse d'homogénéité nécessaire pour le calcul à ce moment. Elles sont ainsi corrigées au cours des itérations suivantes.

Les étapes du procédé selon l'invention telles qu'elles ont été exposées peuvent se résumer en une séquence temporelle composée :

- d'une étape de mesure des vitesses radiales selon les axes de mesure, et,
- d'une étape de calcul du vecteur-vitesse dans le volume d'intérêt.

On obtient ainsi une représentation du vecteur-vitesse dans le volume d'intérêt à l'instant des mesures, en supposant un environnement « figé » ou stationnaire, c'est-à-dire dans lequel les variations temporelles de la vitesse de déplacement du fluide pendant le temps des mesures sont négligeables. Cette hypothèse est toutefois peu limitative car elle impose simplement une stationnarité durant le temps d'acquisition des mesures, ou en d'autres termes que l'environnement varie lentement devant le temps d'acquisition. Or ce temps d'acquisition même dans le cas de mesures séquentielles peut être usuellement limité à quelques secondes.

Afin de décrire le comportement du fluide dans le volume d'intérêt au cours du temps, il est possible de mettre en oeuvre un modèle dynamique de comportement mécanique du fluide, c'est-à-dire un modèle qui prend en compte l'évolution temporelle des grandeurs. Des séquences de mesure et calcul peuvent alors être exécutées de manière périodique au cours du temps, selon des cadences compatibles avec les constantes de temps des phénomènes à observer. La résolution des équations du modèle dynamique pour calculer la vitesse du fluide nécessite alors l'utilisation de vitesses calculée lors de séquences proches dans le temps, afin d'approximer les dérivées temporelles.

Ainsi, le procédé selon l'invention peut comprendre en outre au moins une séquence préalable de mesure de vitesses radiales et de calcul de vitesse du fluide dans le volume d'intérêt, et le calcul de la vitesse du fluide dans le volume d'intérêt peut comprendre l'utilisation d'un modèle dynamique de comportement mécanique du fluide, et l'utilisation de vitesses du fluide calculées lors de ladite ou desdites séquences préalables.

Il est à noter que la périodicité temporelle des séquences est définie par les mesures. Il est tout-à-fait équivalent, sans que la définition de la séquence en soit changée, d'acquérir les mesures d'une pluralité ou de toutes les séquences, et de calculer ultérieurement les vitesses dans le volume d'intérêt pour toute la période temporelle couverte par les mesures.

Le procédé selon l'invention peut être mis en oeuvre dans tous types d'instruments aptes à mesurer des vitesses radiales de fluides selon des axes de mesure, et en particulier dans des instruments :

- utilisant des ondes acoustiques et/ou électromagnétiques pour effectuer les mesures ;
- effectuant des mesures séquentiellement, ou simultanément selon une pluralité ou la totalité des axes de mesure utilisés ;
- présentant une architecture distribuée, avec un ou une pluralité d'émetteurs et un ou une pluralité de récepteurs distincts.

Le procédé selon l'invention peut avantageusement être mis en oeuvre pour la mesure du vent dans les couches basses de l'atmosphère. Il peut avantageusement être mis en oeuvre, par exemple, dans un dispositif de type lidar, radar ou sodar.

Suivant un autre aspect de l'invention, il est proposé un dispositif de détermination de l'écoulement d'un fluide dans un volume d'intérêt mettant en oeuvre le procédé décrit précédemment, comprenant :

- des moyens de mesure à distance, en une pluralité de points de mesure répartis le long d'au moins trois axes de mesure d'orientations spatiales différentes traversant le volume d'intérêt, de la vitesse radiale dudit fluide au voisinage desdits points de mesure,
- des moyens de calcul, en une pluralité de points de calcul répartis selon un maillage dans le volume d'intérêt, de la vitesse du fluide,

caractérisé en ce que lesdits moyens de calcul de la vitesse du fluide sont agencés pour implémenter un modèle de comportement mécanique dudit fluide.

Avantageusement, le dispositif selon l'invention peut comprendre en outre l'un quelconque des dispositifs suivants : lidar, radar, sodar.

**Description des figures et modes de réalisation**

D'autres avantages et particularités de l'invention apparaîtront à la lecture de la description détaillée de mises en oeuvre et de modes de réalisation nullement limitatifs, et des dessins annexés suivants :

- la figure 1 illustre le schéma fonctionnel d'un lidar,
- la figure 2 illustre la relation entre la vitesse radiale mesurée et le vecteur-vitesse du fluide,
- la figure 3 présente une vue d'ensemble du volume d'intérêt, avec le maillage et des axes de mesure,
- la figure 4 illustre le maillage du volume d'intérêt, selon une coupe X-Y,
- la figure 5 présente un exemple de résultat de calcul de vitesse du vent à une altitude donnée avec le procédé selon l'invention,
- la figure 6 illustre un exemple de résultat de calcul de profil du vent en fonction de l'altitude, respectivement avec des anémomètres à coupelles, un lidar mettant en oeuvre une méthode de reconstruction géométrique et un lidar mettant en oeuvre le procédé selon l'invention,
- la figure 7 illustre des résultats de mesure de vitesse de vent obtenus en une position au cours du temps respectivement avec un anémomètre à coupelles, un lidar mettant en oeuvre une méthode de reconstruction géométrique et un lidar mettant en oeuvre le procédé selon l'invention.

On va décrire un mode de mise en oeuvre du procédé selon l'invention dans un lidar atmosphérique, pour des applications de mesure du vent dans les couches basses de l'atmosphère.

Suivant ce mode de réalisation particulier et nullement limitatif, le fluide est de l'air, dont l'écoulement génère le vent.

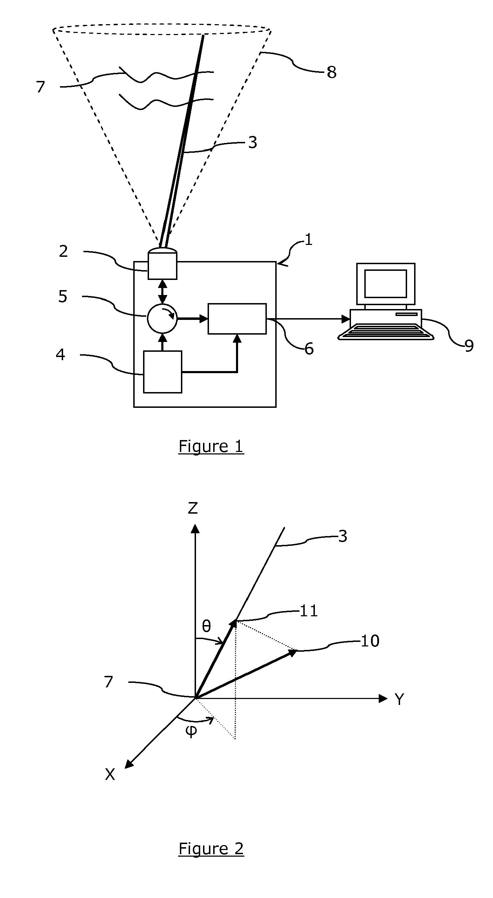

En référence à la figure 1, l'invention est mise en oeuvre dans un lidar 1 de configuration monostatique, tel que présenté par exemple dans le document de A. Dolfi-Bouteyre et al., « 1.5 μm all fiber pulsed lidar for wake vortex monitoring » cité précédemment. Ce lidar comprend :

- une source de lumière 4 avec un laser à impulsions à fibres basé sur une architecture de type MOPFA (qui est l'acronyme en anglais de « Master Oscillator Power Fiber Amplifier »), qui émet des impulsions lumineuses monochromatiques avec une longueur d'onde de l'ordre de 1,5 μm, linéairement polarisées ;
- un collimateur orientable 2 avec une optique de collimation, qui permet d'émettre un faisceau de mesure selon un axe de mesure 3 situé dans un cône de mesure 8 dont l'angle à la base est de l'ordre de 30°, et de collecter la lumière rétrodiffusée dans l'atmosphère par des centres de diffusion 7 tels que des aérosols, des particules ou des polluants jusqu'à des hauteurs supérieures à 400 m ;
- un module de détection 6, dans lequel la lumière rétrodiffusée est mélangée avec le faisceau d'un oscillateur local issu de la source 4, de telle sorte à mettre en oeuvre une détection hétérodyne ;

- un circulateur 5 qui transfère la lumière générée par la source 4 vers le collimateur 2, et la lumière collectée par le collimateur 2 vers le module de détection 6. Ce circulateur est réalisé à base d'éléments optiques polarisants tels qu'un séparateur de faisceau polarisant et des lames d'ondes ; et
- une unité de calcul 9, pour traiter les mesures.

La distance le long de l'axe de mesure 3 à laquelle ont lieu les rétrodiffusions du faisceau par les centres de diffusion 7 est obtenue par le mesure du temps de parcours aller-retour des impulsions lumineuses émises par la source 4 et captées après rétrodiffusion par le module de détection 6.

Le déplacement des centres de diffusion 7 engendre un décalage par effet Doppler de la fréquence de l'onde rétrodiffusée, qui est mesuré grâce à la détection hétérodyne.

En référence à la figure 2, le décalage par effet Doppler de la fréquence de l'onde rétrodiffusée est proportionnel à la vitesse radiale 11, c'est-à-dire la projection sur l'axe de mesure 3 de la vitesse de déplacement des centres de diffusion 7, représentée par le vecteur-vitesse 10.

Les calculs de distance et de vitesse radiale 11 sont effectués dans le domaine spectral, au moyen de Transformées de Fourier Rapides (en Anglais : FFT). Les résolutions obtenues pour la distance et la vitesse radiale 11 sont, respectivement, de l'ordre de quelques mètres et de l'ordre de quelques mètres par seconde. Le temps de mesure selon un axe de mesure 3 est de l'ordre d'une seconde.

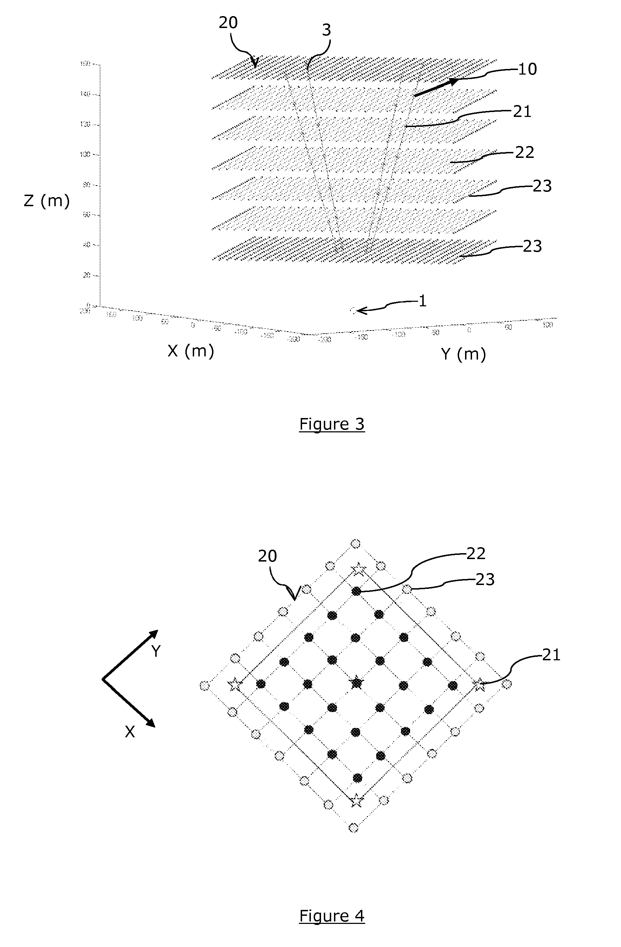

En référence aux figures 3 et 4, le procédé selon l'invention a pour objectif le calcul du vent, représenté par son vecteur-vitesse 10, dans un volume d'intérêt. Ce volume d'intérêt est matérialisé par un maillage 20 de points de calcul 22 et 23 disposés selon des mailles cubique. Un repère cartésien ($X$, $Y$, $Z$) dont l'axe $Z$ définit l'altitude est associé au maillage 20.

Conformément au procédé selon l'invention, le vecteur-vitesse 10 est calculé en un ensemble de points de calcul 22 du maillage 20 en résolvant numériquement les équations d'un modèle de comportement mécanique du fluide (ici de l'air), aux points de calcul 22. Ce calcul nécessite la définition de conditions d'initialisation, qui peuvent être obtenues à partir d'au moins trois mesures de vitesse radiale 11 réalisées selon trois axes de mesure 3 d'orientations différentes.

Suivant ce mode de réalisation, des mesures sont effectuées avec le lidar 1 selon quatre axes de mesure 3 répartis par exemple selon les quatre directions cardinales, et avec des inclinaisons proches des limites du cône de mesures 8 de l'instrument 1. Une cinquième mesure selon un axe vertical peut être également réalisée. On suppose pour la mise en oeuvre du procédé selon l'invention que l'atmosphère est stationnaire ou figée durant le temps nécessaire à l'acquisition de ces quatre ou cinq mesures, c'est-à-dire que le vecteur-vitesse du vent 10 dans le volume d'intérêt est sensiblement constant en chaque point durant ce temps d'acquisition. Cette hypothèse est toutefois peu contraignante dans la mesure où le temps total d'acquisition peut être sensiblement inférieur à dix secondes.

Pour chaque axe de mesure 3, les mesures de vitesses radiales 11 sont moyennées en des points de mesures 21 correspondant à des altitudes prédéterminées, en général équidistantes. Pour simplifier les calculs, on choisit des altitudes correspondent à des plans ($X$, $Y$), avec $Z$ constant, du maillage 20.

Afin de calculer les conditions aux limites à la périphérie dans le volume d'intérêt, c'est-à-dire aux points de calcul 23 situés à la périphérie du maillage 20, on utilise un modèle géométrique classique basé sur l'hypothèse d'homogénéité spatiale du vent à une altitude donnée, dans tout le volume d'intérêt.

Soit $\vec{V}_x = (V_x, V_y, V_z)$ le vecteur-vitesse du vent 10 exprimé dans le repère cartésien ($X$, $Y$, $Z$). Selon l'hypothèse d'homogénéité spatiale, on suppose le *vecteur* $\vec{V}$ constant en tout point d'altitude $Z = Z_h$ et on le note :

$$\vec{V}_h = \left(V_{xh}, V_{yh}, V_{zh}\right) \qquad\qquad\qquad (Eq.\ 11)$$

Comme expliqué précédemment, on effectue avec le lidar 1 des mesures selon $K$ axes de mesure 3 d'orientations différentes repérés par un indice $k$, avec $k = 1...K$ ; $K \geq 3$. Selon les conventions de la figure 2, on note $\varphi_k$ et $\theta_k$ les angles qui définissent l'orientation de l'axe de mesure 3 d'indice $k$.

On calcule à partir des mesures la vitesse radiale en des points de mesure 21 situés le long des axes de mesure 3. En notant $W_{kh}$ la vitesse radiale au point de mesure d'altitude $Z = Z_h$ situé le long de l'axe de mesure $k$, on a :

$$W_{kh} = V_{xh} \cos(\varphi_k) \sin(\theta_k) + V_{yh} \sin(\varphi_k) \sin(\theta_k) + V_{zh} \cos(\theta_k), \qquad (Eq.\ 12)$$

Avec $k = 1...K$.

On obtient ainsi un système de $K$ équations à trois inconnues ($V_{xh}$, $V_{vh}$, $V_{zh}$) que l'on peut résoudre au sens des moindres carrés pour obtenir $\vec{V}_h$.

On affecte ensuite la valeur $\vec{V}_h$ à tous les points périphériques 23 du maillage 20 situés à une altitude $Z = Z_h$, et on effectue cette opération pour toutes les altitudes $Z$, directement ou par interpolation entre des valeurs de $\vec{V}_h$ calculées.

On définit ainsi les conditions aux limites pour la totalité des points 23 situés à la périphérie du maillage 20.

L'étape suivante consiste en la résolution des équations du modèle de comportement mécanique du fluide choisi aux points de calcul 22, en tenant compte des conditions aux limites définies à partir des mesures. Cette résolution est effectuée par une méthode numérique adaptée aux équations choisies.

L'expérience a montré que dans ce mode de mise en oeuvre dédié à l'analyse des mouvements de l'atmosphère, on obtient des résultats satisfaisants en considérant l'air comme un fluide parfait (c'est-à-dire un fluide dont la viscosité est négligeable) dont l'écoulement est irrotationnel dans le volume d'intérêt. Ce choix a l'avantage de conduire à un modèle numérique dont la résolution est simplifiée, ce qui confère des avantages notables en termes de ressources nécessaires et de temps de calcul.

Selon ce modèle, comme démontré précédemment, il existe un potentiel de vitesse $P$ qui décrit le fluide (l'air) et l'écoulement (le vent) peut être décrit par le système d'équations :

$$\begin{cases} \nabla^2 P = 0 \\ \vec{V} = -\vec{\nabla} P \end{cases} \qquad \text{(Eq. 13)}$$

La résolution de ce système est effectuée numériquement par inversion de la matrice du Laplacien aux points de calcul 22, en tenant compte des conditions aux limites.

On obtient ainsi le vecteur-vitesse du vent $\vec{V}$ 10 aux points de calcul 22 du volume d'intérêt. Les valeurs de $\vec{V}$ à la verticale du lidar 1, c'est-à-dire le long de l'axe des altitudes $Z$ et dans son voisinage sont utilisées pour déterminer le profil du vent en fonction de l'altitude dans les meilleures conditions de précision possible.

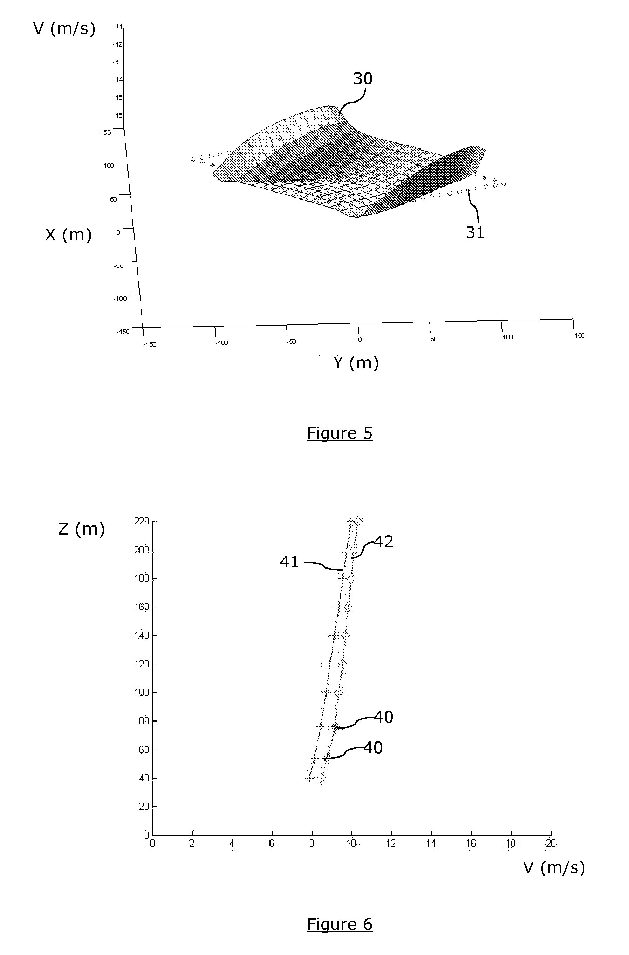

La figure 5 présente un exemple de résultat de calcul de vitesse du vent à une altitude $Z_h$ donnée. La surface 30 est représentative de l'amplitude de la composante horizontale du vecteur-vitesse du vent 10 dans un plan ($X, Y, Z = Z_h$), calculée à partir des conditions aux limites 31.

La figure 6 présente un exemple de résultat de calcul de vitesse du vent en fonction de l'altitude $Z$ (profil vertical). Les mesures sont effectuées respectivement avec deux anémomètres à coupelles de référence (points 40), un lidar mettant en oeuvre un modèle de reconstruction géométrique utilisant l'hypothèse d'homogénéité (courbe 41) et un lidar mettant en oeuvre le procédé selon l'invention basé sur le modèle du fluide parfait (courbe 42). On obtient des résultats bien plus proches de ceux des anémomètres à coupelles (40) avec le lidar utilisant le procédé selon l'invention (42).

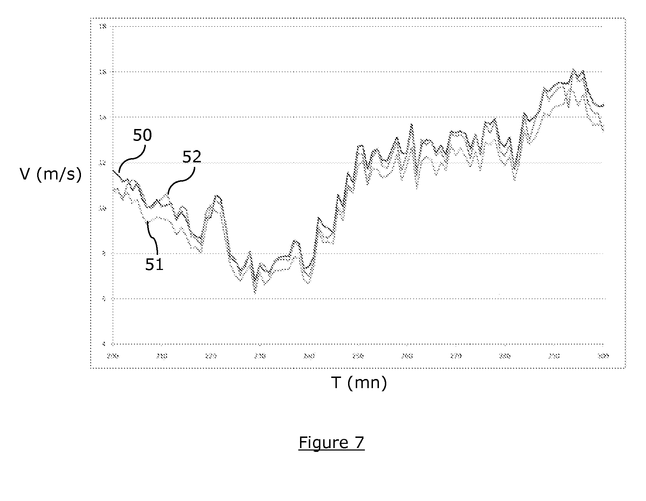

La figure 7 présente les résultats de 16 heures de mesures de vitesses de vent obtenus lors d'une campagne de mesure effectuée en terrain vallonné. les mesures sont effectuées à une altitude d'environs 80 mètres, respectivement avec un anémomètre de référence à coupelles (courbe 50), un lidar mettant en oeuvre un modèle de reconstruction géométrique utilisant l'hypothèse d'homogénéité (courbe 51) et un lidar mettant en oeuvre le procédé selon l'invention basé sur le modèle du fluide parfait (courbe 52).

L'erreur relative du lidar par rapport à l'anémomètre à coupelles est d'environ 6% en utilisant le modèle géométrique pour calculer le vent, et d'environ 2% en utilisant le procédé selon l'invention et le modèle du fluide parfait.

Suivant une variante dans laquelle la résolution des équations du modèle de comportement mécanique du fluide est effectuée par une méthode itérative, on définit des conditions initiales en affectant également la valeur $\vec{V}_h$ préalablement calculée pour définir les conditions aux limites aux points 22 du maillage 20 situés à une altitude $Z = Z_h$ dans le volume d'intérêt, et on effectue cette opération pour toutes les altitudes $Z$, directement ou par interpolation entre des valeurs de $\vec{V}_h$ calculées.

Suivant une autre variante, une connaissance à priori de la topologie du terrain est utilisée comme condition aux limites supplémentaire afin d'améliorer la précision du calcul. Dans ce cas, la zone d'intérêt est étendue de telle sorte à englober le relief du terrain, et une condition aux limites supplémentaire telle que, par exemple, le vecteur-vitesse du vent $\vec{V}$ soit tangentiel à la surface du terrain est appliquée aux points 23 du maillage 20 qui se trouvent à la surface du terrain.

Bien sûr, l'invention n'est pas limitée aux exemples qui viennent d'être décrits et de nombreux aménagements peuvent être apportés à ces exemples sans sortir du cadre de l'invention.

**Revendications**

1. Procédé de détermination de l'écoulement d'un fluide dans un volume d'intérêt, comprenant des étapes de :

   - mesure à distance, en une pluralité de points de mesure (21) répartis le long d'au moins trois axes de mesure (3) d'orientations spatiales différentes traversant le volume d'intérêt, de la vitesse radiale (11) dudit fluide au voisinage desdites points de mesure (21),
   - calcul en une pluralité de points de calcul (22, 23) répartis selon un maillage (20) dans le volume d'intérêt, de la vitesse (10) du fluide,

   **caractérisé en ce que** le calcul de la vitesse (10) du fluide comprend l'utilisation d'un modèle de comportement mécanique dudit fluide.

2. Procédé selon la revendication 1, **caractérisé en ce que** la mesure de vitesse radiale (11) du fluide comprend une mesure de décalages en fréquence par effet Doppler d'ondes préalablement émises et diffusées dans le fluide.

3. Procédé selon les revendications 1 ou 2, **caractérisé en ce qu'**il comprend en outre une étape de calcul de conditions d'initialisation, comprenant un calcul de la vitesse (10) du fluide en des points de calcul (22, 23) à partir de mesures de vitesses radiales (11), en utilisant un modèle géométrique basé sur l'hypothèse que la vitesse (10) du fluide dans le volume d'intérêt est sensiblement homogène dans des couches d'orientation sensiblement parallèle traversées par les axes de mesure (3), lequel calcul de conditions d'initialisation comprenant au moins l'un parmi :

   - un calcul de conditions aux limites comprenant un calcul de conditions contraignantes sur la vitesse (10) du fluide en des points de calcul (23) situés à la périphérie du volume d'intérêt, et
   - un calcul de conditions initiales comprenant un calcul de la vitesse (10) du fluide en des points de calcul (22) situés dans le volume d'intérêt.

4. Procédé selon la revendication 3, **caractérisé en ce qu'**il comprend en outre une étape de calcul de conditions d'initialisation utilisant la topologie d'une surface matérielle présente dans ou en périphérie du volume d'intérêt et limitant l'extension du fluide, comprenant :

   - une détermination de points de calcul (22, 23) du volume d'intérêt situés hors du fluide et/ou au voisinage de ladite surface matérielle, et
   - une attribution de conditions contraignantes sur la vitesse (10) auxdits points de calcul déterminés (22, 23).

5. Procédé selon l'une des revendications 3 ou 4, **caractérisé en ce qu'**il comprend en outre une étape de calcul de la vitesse (10) du fluide dans le volume d'intérêt, par résolution des équations du modèle de comportement mécanique du fluide, en utilisant les conditions d'initialisation préalablement calculées.

6. Procédé selon la revendication 5, **caractérisé en ce que** le modèle de comportement mécanique du fluide comprend l'un quelconque des ensembles d'hypothèses suivantes :

   - le fluide comprend un fluide newtonien incompressible et son écoulement est sensiblement décrit par les équations de Navier-Stokes, ou
   - le fluide comprend un fluide parfait et son écoulement est sensiblement décrit par l'équation d'Euler des fluides.

7. Procédé selon la revendication 6, **caractérisé en ce que** avec $\vec{V}$ le vecteur-vitesse (10) du fluide, $\nu$ la viscosité cinématique du fluide, $\rho$ la masse volumique du fluide, $\vec{f}$ la résultante des forces massiques s'exerçant dans le fluide et $p$ la pression du fluide, l'écoulement dudit fluide est décrit par l'un quelconque des systèmes d'équations :

$$-\begin{cases} \vec{\nabla} \cdot \vec{V} = 0 \\ \dfrac{\partial \vec{V}}{\partial t} - \nu\, \nabla^2 \vec{V} + \left(\vec{V} \cdot \vec{\nabla}\right)\vec{V} + \dfrac{1}{\rho}\,\vec{\nabla}p = \vec{f} \end{cases} \quad ;$$

$$- \begin{cases} \vec{\nabla} \cdot \vec{V} = 0 \\ -\nu \ \nabla^2 \vec{V} + \left(\vec{V} \cdot \vec{\nabla}\right)\vec{V} + \frac{1}{\rho} \vec{\nabla}p = \vec{0} \end{cases} ;$$

$$- \begin{cases} \vec{\nabla} \cdot \vec{V} = 0 \\ \left(\vec{V} \cdot \vec{\nabla}\right)\vec{V} + \frac{1}{\rho} \vec{\nabla}p = \vec{0} \end{cases} ;$$

$$- \quad \vec{\nabla} \cdot \vec{V} = 0 \ .$$

8. Procédé selon la revendication 7, **caractérisé en ce que** les équations du modèle de comportement mécanique du fluide sont résolues numériquement aux points de calcul du volume d'intérêt par une méthode itérative.

9. Procédé selon la revendication 8, **caractérisé en ce que** la résolution des équations du modèle de comportement mécanique comprend l'utilisation de matrices de conditionnement.

10. Procédé selon la revendication 5, **caractérisé en ce que** le modèle de comportement mécanique du fluide comprend les hypothèses que le fluide comprend un fluide parfait, dont l'écoulement est sensiblement irrotationnel dans le volume d'intérêt.

11. Procédé selon la revendication 10, **caractérisé en ce que** avec $\vec{V}$ le vecteur-vitesse (10) du fluide et $P$ un potentiel de vitesse, l'écoulement dudit fluide est décrit par le système d'équations :

$$\begin{cases} \nabla^2 P = 0 \\ \vec{V} = -\vec{\nabla}P \end{cases}$$

12. Procédé selon la revendication 11, **caractérisé en ce que** les équations du modèle de comportement mécanique du fluide sont résolues numériquement aux points de calcul du volume d'intérêt par inversion de la matrice du Laplacien.

13. Procédé selon l'une quelconque des revendications 5 à 12, **caractérisé en ce qu'**il comprend en outre des étapes de :

- calcul de nouvelles conditions d'initialisation à partir de la vitesse (10) du fluide préalablement calculée dans le volume d'intérêt par résolution des équations du modèle de comportement mécanique du fluide,
- calcul de la vitesse (10) du fluide dans le volume d'intérêt, par résolution des équations du modèle de comportement mécanique du fluide, en utilisant lesdites nouvelles conditions d'initialisation.

14. Procédé selon l'une quelconque des revendications précédentes, **caractérisé en ce qu'**il comprend en outre au moins une séquence préalable de mesure de vitesses radiales (11) et de calcul de vitesse (10) du fluide dans le volume d'intérêt, et **en ce que** le calcul de la vitesse (10) du fluide dans le volume d'intérêt comprend l'utilisation d'un modèle dynamique de comportement mécanique du fluide, et l'utilisation de vitesses (10) du fluide calculées lors de ladite ou desdites séquences préalables.

15. Procédé selon l'une quelconque des revendications précédentes, **caractérisé en ce qu'**il est mis en oeuvre pour la mesure du vent dans les couches basses de l'atmosphère.

16. Dispositif de détermination de l'écoulement d'un fluide dans un volume d'intérêt mettant en oeuvre le procédé selon l'une quelconque des revendications précédentes, comprenant :

- des moyens de mesure à distance (1), en une pluralité de points de mesure (21) répartis le long d'au moins trois axes de mesure (3) d'orientations spatiales différentes traversant le volume d'intérêt, de la vitesse radiale (11) dudit fluide au voisinage desdits points de mesure (21),
- des moyens de calcul (9), en une pluralité de points de calcul (22, 23) répartis selon un maillage (20) dans le volume d'intérêt, de la vitesse (10) du fluide,

**caractérisé en ce que** lesdits moyens de calcul (9) de la vitesse (10) du fluide sont agencés pour implémenter un modèle de comportement mécanique dudit fluide.

17. Dispositif selon la revendication 16, **caractérisé en ce qu'**il comprend en outre l'un quelconque des dispositifs suivants : lidar, radar, sodar.


**Patentansprüche**

1. Verfahren zur Bestimmung der Strömung eines Fluids in einem Raum von Interesse, umfassend Schritte zur:

- Fernmessung - an einer Vielzahl von Messstellen (21), die entlang von wenigstens drei den Raum von Interesse durchquerenden Messachsen (3) mit unterschiedlichen räumlichen Ausrichtungen verteilt sind - der radialen Geschwindigkeit (11) des Fluids in der Nähe der Messstellen (21),
- Berechnung - an einer Vielzahl von Berechnungsstellen (22, 23), die entlang eines Gitternetzes (20) in dem Raum von Interesse verteilt sind - der Geschwindigkeit (10) des Fluids,

**dadurch gekennzeichnet, dass** die Berechnung der Geschwindigkeit (10) des Fluids die Verwendung eines mechanischen Verhaltensmodells des Fluids umfasst.

2. Verfahren nach Anspruch 1, **dadurch gekennzeichnet, dass** die Messung der radialen Geschwindigkeit (11) des Fluids eine Messung von Frequenzverschiebungen durch Doppler-Effekt von zuvor ausgesandten und in dem Fluid verteilten Wellen umfasst.

3. Verfahren nach den Ansprüchen 1 oder 2, **dadurch gekennzeichnet, dass** es ferner einen Schritt zur Berechnung von Initialisierungsbedingungen umfasst, mit einer Berechnung der Geschwindigkeit (10) des Fluids an Berechnungsstellen (22, 23) anhand von Messungen radialer Geschwindigkeiten (11), unter Verwendung eines geometrischen Modells, das auf der Hypothese basiert, dass die Geschwindigkeit (10) des Fluids in dem Raum von Interesse in Schichten mit im Wesentlichen paralleler Ausrichtung, welche von den Messachsen (3) durchquert werden, im Wesentlichen homogen ist, wobei die Berechnung von Initialisierungsbedingungen wenigstens eine umfasst aus:

- einer Berechnung von Randbedingungen, die eine Berechnung von Zwangsbedingungen über die Geschwindigkeit (10) des Fluids an Berechnungsstellen (23), die am Umfang des Raums von Interesse gelegen sind, umfasst, und
- einer Berechnung von Ausgangsbedingungen, die eine Berechnung der Geschwindigkeit (10) des Fluids an Berechnungsstellen (22), die in dem Raum von Interesse gelegen sind, umfasst.

4. Verfahren nach Anspruch 3, **dadurch gekennzeichnet, dass** es ferner einen Schritt zur Berechnung von Initialisierungsbedingungen umfasst, der die Topologie einer materiellen Fläche, welche in dem oder am Umfang des Raums von Interesse vorhanden ist und die Ausdehnung des Fluids begrenzt, verwendet, umfassend:

- eine Bestimmung von Berechnungsstellen (22, 23) des Raums von Interesse, die außerhalb des Fluids oder in der Nähe der materiellen Fläche gelegen sind, und
- eine Zuweisung von Zwangsbedingungen über die Geschwindigkeit (10) zu den bestimmten Berechnungsstellen (22, 23).

5. Verfahren nach einem der Ansprüche 3 oder 4, **dadurch gekennzeichnet, dass** es ferner einen Schritt zur Berechnung der Geschwindigkeit (10) des Fluids in dem Raum von Interesse durch Lösen der Gleichungen des mechanischen Verhaltensmodells des Fluids, unter Verwendung der zuvor berechneten Initialisierungsbedingungen umfasst.

**6.** Verfahren nach Anspruch 5, **dadurch gekennzeichnet, dass** das mechanische Verhaltensmodell des Fluids eine der folgenden Hypothesen-Einheiten umfasst:

- das Fluid umfasst ein inkompressibles Newton'sches Fluid, und seine Strömung ist im Wesentlichen durch die Navier-Stokes-Gleichungen beschrieben, oder
- das Fluid umfasst ein ideales Fluid, und seine Strömung ist im Wesentlichen durch die Euler-Gleichung der Fluide beschrieben.

**7.** Verfahren nach Anspruch 6, **dadurch gekennzeichnet, dass** mit $\vec{V}$ dem Geschwindigkeits-Vektor (10) des Fluids, $v$ der kinematischen Viskosität des Fluids, $\rho$ der volumenbezogenen Masse des Fluids, $\vec{f}$ der Resultierenden der in dem Fluid wirkenden Massenkräfte und p dem Druck des Fluids, die Strömung des Fluids durch eines der Gleichungssysteme beschrieben ist:

$$- \begin{cases} \vec{\nabla} \cdot \vec{V} = 0 \\ \dfrac{\partial \vec{V}}{\partial t} - v \ \nabla^2 \vec{V} + \left( \vec{V} \cdot \vec{\nabla} \right) \vec{V} + \dfrac{1}{\rho} \vec{\nabla} p = \vec{f} \end{cases} ;$$

$$- \begin{cases} \vec{\nabla} \cdot \vec{V} = 0 \\ - v \ \nabla^2 \vec{V} + \left( \vec{V} \cdot \vec{\nabla} \right) \vec{V} + \dfrac{1}{\rho} \vec{\nabla} p = \vec{0} \end{cases} ;$$

$$- \begin{cases} \vec{\nabla} \cdot \vec{V} = 0 \\ \left( \vec{V} \cdot \vec{\nabla} \right) \vec{V} + \dfrac{1}{\rho} \vec{\nabla} p = \vec{0} \end{cases} ;$$

$$- \quad \vec{\nabla} \cdot \vec{V} = 0 .$$

**8.** Verfahren nach Anspruch 7, **dadurch gekennzeichnet, dass** die Gleichungen des mechanischen Verhaltensmodells des Fluids an den Berechnungsstellen des Raums von Interesse durch ein iteratives Verfahren numerisch gelöst werden.

**9.** Verfahren nach Anspruch 8, **dadurch gekennzeichnet, dass** die Lösung der Gleichungen des mechanischen Verhaltensmodells die Verwendung von Konditionierungsmatrizen umfasst.

**10.** Verfahren nach Anspruch 5, **dadurch gekennzeichnet, dass** das mechanische Verhaltensmodell des Fluids die Hypothesen umfasst, dass das Fluid eine ideales Fluid umfasst, dessen Strömung in dem Raum von Interesse im Wesentlichen nichtrotierend ist.

**11.** Verfahren nach Anspruch 10, **dadurch gekennzeichnet, dass** mit $\vec{V}$ dem Geschwindigkeits-Vektor (10) des Fluids und P einem Geschwindigkeitspotential, die Strömung des Fluids durch das Gleichungssystem beschrieben ist:

$$\begin{cases} \nabla^2 P = 0 \\ \vec{V} = -\vec{\nabla} P \end{cases}$$

**12.** Verfahren nach Anspruch 11, **dadurch gekennzeichnet, dass** die Gleichungen des mechanischen Verhaltensmodells des Fluids an den Berechnungsstellen des Raums von Interesse durch Inversion der Laplace-Matrix numerisch gelöst sind.

**13.** Verfahren nach einem der Ansprüche 5 bis 12, **dadurch gekennzeichnet, dass** es ferner Schritte umfasst zur:

- Berechnung von neuen Initialisierungsbedingungen anhand der Geschwindigkeit (10) des Fluids, die zuvor in dem Raum vom Interesse durch Lösung der Gleichungen des mechanischen Verhaltensmodells des Fluids berechnet wurde,
- Berechnung der Geschwindigkeit (10) des Fluids in dem Raum von Interesse durch Lösen der Gleichungen des mechanischen Verhaltensmodells des Fluids, unter Verwendung der neuen Initialisierungsbedingungen.

**14.** Verfahren nach einem der vorhergehenden Ansprüche, **dadurch gekennzeichnet, dass** es ferner wenigstens eine vorherige Folge zur Messung von radialen Geschwindigkeiten (11) und zur Berechnung der Geschwindigkeit (10) des Fluids in dem Raum von Interesse umfasst und dass die Berechnung der Geschwindigkeit (10) des Fluids in dem Raum von Interesse die Verwendung eines dynamischen Modells des mechanischen Verhaltens des Fluids sowie die Verwendung von Geschwindigkeiten (10) des Fluids, die während der vorherigen Folge oder Folgen berechnet wurden, umfasst.

**15.** Verfahren nach einem der vorhergehenden Ansprüche, **dadurch gekennzeichnet, dass** es für die Messung des Windes in den unteren Schichten der Atmosphäre angewandt wird.

**16.** Vorrichtung zur Bestimmung der Strömung eines Fluids in einem Raum von Interesse, die das Verfahren nach einem der vorhergehenden Ansprüche durchführt, umfassend:

- Mittel zur Fernmessung (1) - an einer Vielzahl von Messstellen (21), die entlang von wenigstens drei den Raum von Interesse durchquerenden Messachsen (3) mit unterschiedlichen räumlichen Ausrichtungen verteilt sind - der radialen Geschwindigkeit (11) des Fluids in der Nähe der Messstellen (21),
- Mittel zur Berechnung (9) - an einer Vielzahl von Berechnungsstellen (22, 23), die entlang eines Gitternetzes (20) in dem Raum von Interesse verteilt sind - der Geschwindigkeit (10) des Fluids,

**dadurch gekennzeichnet, dass** die Mittel zur Berechnung (9) der Geschwindigkeit (10) des Fluids dazu eingerichtet sind, ein mechanisches Verhaltensmodell des Fluids zu implementieren.

**17.** Vorrichtung nach Anspruch 16, **dadurch gekennzeichnet, dass** sie ferner eine der folgenden Vorrichtungen umfasst: Lidar, Radar, Sodar.

**Claims**

**1.** Method for determining the flow of a fluid in a volume of interest, comprising steps of:

- remote measurement, at a plurality of measurement points (21) distributed along at least three measurement axes (3) with different spatial orientations and passing through the volume of interest, of the radial velocity (11) of said fluid in the vicinity of said measurement points (21),
- calculation of the velocity (10) of the fluid at a plurality of calculation points (22, 23) distributed as a grid (20) in the volume of interest,

**characterized in that** the calculation of the velocity (10) of the fluid comprises the use of a mechanical behaviour model of said fluid.

2. Method according to claim 1, **characterized in that** the measurement of radial velocity (11) of the fluid comprises a measurement of Doppler frequency shifts of waves previously transmitted and scattered in the fluid.

3. Method according to claim 1 or 2, **characterized in that** it further comprises a step of calculating initialization conditions, comprising a calculation of the velocity (10) of the fluid at calculation points (22, 23) from measures of radial velocities (11), using a geometric model based on the hypothesis that the velocity (10) of the fluid in the volume of interest is substantially homogeneous in layers of substantially parallel orientation through which the measurement axes (3) pass, said calculation of initialization conditions comprising at least one of:

   - a calculation of boundary conditions comprising a calculation of conditions that are limiting for the velocity (10) of the fluid at calculation points (23) located at the periphery of the volume of interest, and
   - a calculation of initial conditions comprising a calculation of the velocity (10) of the fluid at calculation points (22) located in the volume of interest.

4. Method according to claim 3, **characterized in that** it further comprises a step of calculating initialization conditions using the topology of a material surface present in or at the periphery of the volume of interest and limiting the extension of the fluid, comprising:

   - a determination of calculation points (22, 23) of the volume of interest located outside of the fluid and/or in the vicinity of said material surface, and
   - attribution of conditions that are limiting for the velocity (10) at said defined calculation points (22, 23).

5. Method according to one of claim 3 or 4, **characterized in that** it further comprises a step of calculating the velocity (10) of the fluid in the volume of interest, by solving the equations of the mechanical behaviour model of the fluid, using the previously calculated initialization conditions.

6. Method according to claim 5, **characterized in that** the mechanical behaviour model of the fluid comprises any one of the following sets of hypotheses:

   - the fluid comprises an incompressible Newtonian fluid and its flow is described approximately by the Navier-Stokes equations, or
   - the fluid comprises a perfect fluid and its flow is described approximately by the Euler equation of fluids.

7. Method according to claim 6, **characterized in that** with $\vec{V}$ denoting the velocity vector (10) of the fluid, $\nu$ the kinematic viscosity of the fluid, $\rho$ the density of the fluid, $\vec{f}$ the resultant of the body forces exerted in the fluid and $p$ the pressure of the fluid, the flow of said fluid is described by any one of the systems of equations:

$$- \begin{cases} \vec{\nabla} \cdot \vec{V} = 0 \\ \dfrac{\partial \vec{V}}{\partial t} - \nu \, \nabla^2 \vec{V} + \left( \vec{V} \cdot \vec{\nabla} \right) \vec{V} + \dfrac{1}{\rho} \vec{\nabla} p = \vec{f} \end{cases} ;$$

$$- \begin{cases} \vec{\nabla} \cdot \vec{V} = 0 \\ - \nu \, \nabla^2 \vec{V} + \left( \vec{V} \cdot \vec{\nabla} \right) \vec{V} + \dfrac{1}{\rho} \vec{\nabla} p = \vec{0} \end{cases} ;$$

$$- \begin{cases} \vec{\nabla} \cdot \vec{V} = 0 \\ \left( \vec{V} \cdot \vec{\nabla} \right) \vec{V} + \dfrac{1}{\rho} \vec{\nabla} p = \vec{0} \end{cases} ;$$

$$- \quad \vec{\nabla} \cdot \vec{V} = 0 \, .$$

8. Method according to claim 7, **characterized in that** the equations of the mechanical behaviour model of the fluid are solved numerically at the calculation points of the volume of interest by an iterative method.

9. Method according to claim 8, **characterized in that** solving the equations of the mechanical behaviour model comprises the use of conditioning matrices.

10. Method according to claim 5, **characterized in that** the mechanical behaviour model of the fluid comprises the hypotheses that the fluid comprises a perfect fluid, the flow of which being approximately irrotational in the volume of interest.

11. Method according to claim 10, **characterized in that** with $\vec{V}$ denoting the velocity vector (10) of the fluid and $P$ a velocity potential, the flow of said fluid is described by the system of equations:

$$\begin{cases} \nabla^2 P = 0 \\ \vec{V} = -\vec{\nabla} P \end{cases}$$

12. Method according to claim 11, **characterized in that** the equations of the mechanical behaviour model of the fluid are solved numerically at the calculation points of the volume of interest by inversion of the matrix of the Laplacian.

13. Method according to any one of claims 5 to 12, **characterized in that** it further comprises steps of:

   - calculating new initialization conditions from the velocity (10) of the fluid previously calculated in the volume of interest by solving the equations of the mechanical behaviour model of the fluid,
   - calculating the velocity (10) of the fluid in the volume of interest, by solving the equations of the mechanical behaviour model of the fluid, using said new initialization conditions.

14. Method according to any one of the preceding claims, **characterized in that** it further comprises at least one preliminary sequence of measuring radial velocities (11) and of calculating the velocity (10) of the fluid in the volume of interest, and **in that** the calculation of the velocity (10) of the fluid in the volume of interest comprises the use of a dynamic mechanical behaviour model of the fluid, and the use of velocities (10) of the fluid calculated during said preliminary sequence or sequences.

15. Method according to any one of the preceding claims, **characterized in that** it is implemented for measuring the wind in the lower layers of the atmosphere.

16. Device for determining the flow of a fluid in a volume of interest implementing the method according to any one of the preceding claims, comprising:

   - means for remote measurement (1), at a plurality of measurement points (21) distributed along at least three measurement axes (3) with different spatial orientations and passing through the volume of interest, of the radial velocity (11) of said fluid in the vicinity of said measurement points (21),
   - means for calculation (9) of the velocity (10) of the fluid at a plurality of calculation points (22, 23) distributed as a grid (20) in the volume of interest, **characterized in that** said means for calculation (9) of the velocity (10) of the fluid are arranged for implementing a mechanical behaviour model of said fluid.

17. Device according to claim 16, **characterized in that** it further comprises any one of the following devices: lidar, radar, sodar.

Figure 1

Figure 2

Figure 3

Figure 4

Figure 5

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 4735503 A, Werner

**Littérature non-brevet citée dans la description**

• **A. DOLFI-BOUTEYRE ; M. VALLA ; B. AUGÈRE ; J.-P. CARIOU ; D. GOULAR ; D. FLEURY ; G. CANAT ; C. PLANCHAT ; T. GAUDO ; L. LOMBARD.** 1.5 $\mu$m all fiber pulsed lidar for wake vortex monitoring. *14th Coherent Laser Radar Conference (CLRC XIV),* 08 Juillet 2007